# EUROPEAN PATENT APPLICATION

(11) **EP 4 746 351 A1**
(43) Date of publication of application: **20.05.2026**
(21) Application number: 25213360.8
(22) Date of filing: 04.11.2025
(51) Int. Cl.: H04L 9/40, H04L 69/22

(54) **SECURING COMMUNICATIONS BASED ON PACKET NUMBERS**

(30) Priority: 19.11.2024 US 202418952220
(71) Applicant: Nokia Solutions and Networks Oy, 02610 Espoo (FI)
(72) Inventor: Bidgoli, Hooman, Ottawa, K2T0E4 (CA)
(74) Representative: Zinsinger, Norbert

(57) **Abstract**

Various example embodiments of a secure communication capability are presented. The secure communication capability may be configured to support use of a Media Access Control (MAC) Security Tag (SecTag) header, within the context of Media Access Control Security (MACsec) or any Open Systems Interconnection (OSI) layer capable of using the SecTag header, to secure communications between communication devices. The secure communication capability may be configured to support use of packet numbers (PNs), including 64-bit PNs, within the SecTag header. The secure communication capability may be configured to support use of 64-bit PNs by encoding 64-bit PNs within a Packet Number (PN) field of the SecTag header. The secure communication capability may be configured to support use of 64-bit PNs within the MAC SecTag header in a manner for supporting use of PN partitioning for secure communication over multi-link paths.

## Description

### TECHNICAL FIELD

Various example embodiments relate generally to communication systems and, more particularly but not exclusively, to supporting secure communications in communication systems.

### BACKGROUND

Various communications technologies may be used to support communications in various types of communication systems.

### SUMMARY

In at least some example embodiments, an apparatus includes at least one processor and at least one memory storing instructions which, when executed by the at least one processor, cause the apparatus at least to support communication of a Media Access Control (MAC) Security Tag (SecTag) header, wherein the SecTag header includes a packet number field including a 64-bit packet number. In at least some example embodiments, a computer-readable storage medium stores computer program instructions which, when executed by an apparatus, cause the apparatus at least to support communication of a Media Access Control (MAC) Security Tag (SecTag) header, wherein the SecTag header includes a packet number field including a 64-bit packet number. In at least some example embodiments, a method includes supporting communication of a Media Access Control (MAC) Security Tag (SecTag) header, wherein the SecTag header includes a packet number field including a 64-bit packet number. In at least some example embodiments, an apparatus includes means for supporting communication of a Media Access Control (MAC) Security Tag (SecTag) header, wherein the SecTag header includes a packet number field including a 64-bit packet number. In at least some example embodiments, the SecTag header is included within a Layer 2 frame secured based on Media Access Control Security (MACsec). In at least some example embodiments, the SecTag header is included within a Layer 2 frame, a Layer 2.5 packet, or a Layer 3 packet. In at least some example embodiments, the SecTag header is included within an Ethernet frame, a Multiprotocol Label Switching (MPLS) packet, or an Internet Protocol (IP) packet. In at least some example embodiments, the SecTag header further includes a link identifier field for identifying a link over which the SecTag header is sent. In at least some example embodiments, the link identifier field forms part of the packet number field. In at least some example embodiments, the link identifier field includes N most significant bits of the packet number field. In at least some example embodiments, the link is associated with a link aggregation group or an equal-cost multi-path group. In at least some example embodiments, a portion of the 64-bit packet number identifies a link over which the SecTag header is sent. In at least some example embodiments, the link is associated with a link aggregation group or an equal-cost multi-path group.

In at least some example embodiments, an apparatus includes at least one processor and at least one memory storing instructions which, when executed by the at least one processor, cause the apparatus at least to support communication of a protocol data unit including a header of a security protocol, wherein the header of the security protocol includes a packet number field for specifying a packet number and includes a link identifier field for identifying a link. In at least some example embodiments, a computer-readable medium stores computer program instructions which, when executed by an apparatus, cause the apparatus at least to support communication of a protocol data unit including a header of a security protocol, wherein the header of the security protocol includes a packet number field for specifying a packet number and includes a link identifier field for identifying a link. In at least some example embodiments, a method includes supporting communication of a protocol data unit including a header of a security protocol, wherein the header of the security protocol includes a packet number field for specifying a packet number and includes a link identifier field for identifying a link. In at least some example embodiments, an apparatus includes means for supporting communication of a protocol data unit including a header of a security protocol, wherein the header of the security protocol includes a packet number field for specifying a packet number and includes a link identifier field for identifying a link. In at least some example embodiments, a first portion of the packet number field includes the link identifier field, and a second portion of the packet number field includes a packet number value field. In at least some example embodiments, a first portion of the packet number includes a link identifier value identifying the link, and a second portion of the packet number includes a packet number value sent for the protocol data unit. In at least some example embodiments, the packet number field includes the link identifier field. In at least some example embodiments, the link identifier field is defined as one or more of the most significant bits of the packet number field. In at least some example embodiments, the link identifier field has encoded therein a link identifier value identifying a link over which the protocol data unit is sent. In at least some example embodiments, the packet number field includes the link identifier field and a packet number value field, wherein the link identifier field has encoded therein a link identifier value identifying a link over which the protocol data unit is sent, wherein the packet number value field has encoded therein a packet number value sent for the protocol data unit. In at least some example embodiments, the packet number value sent for the protocol data unit is selected from a pool of packet number values for the link over which the protocol data unit is sent. In at least some example embodiments, the link identifier field includes a link identifier value identifying a link of a multi-link path including a plurality of links. In at least some example embodiments, the plurality of links is associated as a link aggregation group or an equal-cost multi-path group. In at least some example embodiments, the plurality of links includes x links, where the link identifier field is defined as the N most significant bits of the packet number field, where N ≥ x. In at least some example embodiments, the plurality of links includes x links, where the link identifier field is defined as the N most significant bits of the packet number field, where 2^{N} ≥ x. In at least some example embodiments, the packet number has a length of at least 64 bits. In at least some example embodiments, the security protocol comprises a Media Access Control Security (MACsec) protocol based on at least one Institute of Electrical and Electronics Engineers (IEEE) 802.1AE standard. In at least some example embodiments, the header of the security protocol comprises a Media Access Control (MAC) Security Tag (SecTag) header. In at least some example embodiments, the protocol data unit comprises a Layer 2 frame, a Layer 2.5 packet, or a Layer 3 packet.

In at least some example embodiments, a protocol data unit is provided. The protocol data unit includes a header of a security protocol, where the header of the security protocol includes a packet number field for specifying a packet number and includes a link identifier field for identifying a link. In at least some example embodiments, a first portion of the packet number field includes the link identifier field, and a second portion of the packet number field includes a packet number value field. In at least some example embodiments, a first portion of the packet number includes a link identifier value identifying the link, and a second portion of the packet number includes a packet number value sent for the protocol data unit. In at least some example embodiments, the packet number field includes the link identifier field. In at least some example embodiments, the link identifier field is defined as one or more of the most significant bits of the packet number field. In at least some example embodiments, the link identifier field has encoded therein a link identifier value identifying a link over which the protocol data unit is sent. In at least some example embodiments, the packet number field includes the link identifier field and a packet number value field, the link identifier field has encoded therein a link identifier value identifying a link over which the protocol data unit is sent, and the packet number value field has encoded therein a packet number value sent for the protocol data unit. In at least some example embodiments, the packet number value sent for the protocol data unit is selected from a pool of packet number values defined for the link over which the protocol data unit is sent. In at least some example embodiments, an apparatus includes at least one processor and at least one memory is configured to support communication of such a protocol data unit. In at least some example embodiments, a computer-readable medium stores computer program code which, when executed by an apparatus, cause the apparatus to support communication of such a protocol data unit. In at least some example embodiments, a method include supporting communication of such a protocol data unit. In at least some example embodiments, an apparatus includes means for supporting communication of such a protocol data unit.

### BRIEF DESCRIPTION OF THE DRAWINGS

The teachings herein can be readily understood by considering the following detailed description in conjunction with the accompanying drawings, in which:
FIG. 1 depicts an example embodiment of a communication system configured to support secure communications based on a Media Access Control (MAC) Security Tag (SecTag) header;
FIG. 2 depicts an example embodiment of a SecTag header configured to support use of 64-bit packet numbers;
FIG. 3 depicts an example embodiment of a method for use by a communication device to support secure communications based on use of 64-bit packet numbers within the SecTag header;
FIG. 4 depicts an example embodiment of use of a 64-bit packet number to support secure communications over a multi-link path based on partitioning of the 64-bit packet number;
FIG. 5 depicts an example embodiment of a method for use by a communication device to support secure communications over a multi-link path based on partitioning of packet numbers; and
FIG. 6 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments of a secure communication capability are presented herein. The secure communication capability may be configured to support use of Media Access Control Security (MACsec), based on Institute of Electrical and Electronics Engineers (IEEE) 802.1AE standards, to provide secure communications between communication devices. The secure communication capability may be configured to support use of a Media Access Control (MAC) Security Tag (SecTag) header, within the context of MACsec or within the context of any Open Systems Interconnection (OSI) layer capable of using the SecTag header (e.g., Layer 2 (L2), Layer 2.5 (L2.5), Layer 3 (L3), or the like, as well as various combinations thereof), to secure communications between communication devices. The secure communication capability may be configured to support use of packet numbers (PNs), including 64-bit PNs or PNs having a length greater than 64 bits (although it will be appreciated that, for purposes of clarity, various example embodiments are primarily presented herein within the context of supporting use of 64-bit PNs), within the SecTag header for securing communications between communication devices. The secure communication capability may be configured to support use of 64-bit PNs, within the context of MACsec or any OSI layer using the SecTag header, by supporting encoding of 64-bit PNs within the Packet Number (PN) field of the SecTag header. The secure communication capability may be configured to support use of 64-bit PNs, within the context of MACsec or any OSI layer using the SecTag header, by supporting encoding of 64-bit PNs based on support for two operational modes as follows: (1) a first operational mode which is compliant with IEEE 802.1AEbw-2013 (e.g., where the 32 least significant bits (LSBs) of the 64-bit PN are included in the PN field of the SecTag header and the 32 most significant bits (MSBs) of the 64-bit PN are tracked locally at the communication device) and (2) a second operational mode in which the 64-bit PN is included in the PN field of the SecTag header. The secure communication capability may be configured to support use of 64-bit PNs within the context of the SecTag header in a manner for enabling MACsec to be applied at various OSI layers (e.g., using MACsec to secure all or part of a Layer 2 frame, using MACsec to secure all or part of a Layer 2.5 packet (e.g., an MPLS packet) encapsulated in a Layer 2 frame when transmitted between routers and leaving the Layer 2.5 header in clear, using MACsec to secure all or part of a Layer 3 packet (e.g., an IP packet) encapsulated in a Layer 2 frame when transmitted between routers and leaving the Layer 3 header in clear, or the like). The secure communication capability may be configured to support use of 64-bit PNs within the context of the SecTag header in a manner for supporting use of PN partitioning for secure communication over multi-link paths (e.g., supporting use of a portion of the PN for link identification in multi-link paths which may be based on Link Aggregation Groups (LAGs), Equal-Cost Multi-Path (ECMP), or the like). It will be appreciated that these example embodiments, as well as various other example embodiments, may be further understood by first considering various aspects of MACsec standards.

MACsec was first introduced in the IEEE 802.1AE-2006 standard. In MACsec, an Initialization Vector (IV) is a number that is used with a secret key, such as a Secure Association Key (SAK), to encrypt and decrypt data. IEEE 802.1AE-2006 identifies a packet number (PN) as a monotonically increasing value used to uniquely identify a MACsec frame in the sequence of frames transmitted using a security association (SA). In MACsec, the PNs are used as an input for calculation of the IV that is used with the SAK for secure encryption and decryption of data. The PNs also may be used for replay window protection as per Section 9.8 of IEEE 802.1AE-2006. IEEE 802.1AE-2006 defines a 32-bit PN, which is sufficient for relatively slow interfaces (e.g., 1 GigE interfaces to 100 GigE interfaces). For faster interfaces (e.g., 400 GigE interfaces and beyond), however, a 32-bit PN is insufficient and a larger 64-bit PN, which may be referred to more generally as a larger PN, is needed. This is because MACsec sends a new SAK to the peer when the PN has reached approximately halfway. As an example, for 32-bit PNs, MACsec needs to generate a new SAK when the packet number has reached approximately halfway of the 2^32 bit. Using 32 bit packet numbers at 400 GigE for 64 byte packets means MACsec needs to rotate the SAK at ~2.25sec, which is cumbersome or impossible to achieve given the current MACsec Key Agreement (MKA) standard.

IEEE 802.1AEbw-2013 solves the above issue by allowing support for 64-bit PNs for MACsec. IEEE 802.1AEbw-2013 talks about an extended PN (XPN) for MACsec, which is the optional use of Cipher Suites that make use of a 64-bit PN to allow more than 2³² MACsec protected frames to be sent with a single SAK. However, to ensure compatibility with IEEE 802.1AE-2006, the entire 64-bit PN is not transmitted within the packet; rather, only the 32 least significant bits of the 64-bit PN are transmitted within the packet and each peer individually tracks the 32 most significant bits of the 64-bit PN locally. When the 32 least significant bits of the 64-bit PN that are being transmitted within the packet are exhausted, each peer increments the locally stored 32 most significant bits of the 64-bit PN. This works well for MACsec, as MACsec is Layer 2 encryption and the encryption is provided per link or per port. As an example, the user must enable MACsec on a single link (or port) and MACsec encrypts and authenticates the packets on that link (or port) sequentially as they are transmitted and, similarly, increments the PN sequentially. This procedure ensure that all packets have PNs that are sequential and accurate. In short, the same link (or port) on the same MACsec encryption engine increments the PN for a traffic flow and this guarantees sequential PN increases for the traffic flow such that the PNs are sequential and accurate for all packets of the traffic flow.

IEEE 802.1AE may be used for Multiprotocol Label Switching (MPLS) and Internet Protocol (IP) flow encryption. In general, MPLS and IP packet transmission within a network are not as deterministic as Layer 2 packets. While Layer 2 packets are forwarded over a single link or port using the same MACsec encryption engine, MPLS and IP packet transmission can be over multiple links and ports and, as such, these multiple links and ports can be on different MACsec encryption engines, thereby resulting in a need to ensure that the PNs for a single encrypted flow are synchronized on the multiple MACsec encryption engines that are encrypting that single encrypted flow. As an example, consider an IP flow that is being transmitted on a first port and, because of failure of the first port, the IP flow has to switch to a second port. This switch can be caused, for example, because of an Interior Gateway Protocol (IGP) reroute or a fast re-route (FRR). In any case, the first port and the second port can have different MACsec encryption engines, in which case the PN of the IP flow on the two MACsec encryption engines must be in synchronization. To be more precise, the MACsec encryption engine for the second port should know the last PN number and the 32-bit PN that is being transmitted within the encrypted packet and its SecTag on the first port and has to be synchronized very rapidly between the two ports and the two separate MACsec encryption engines, which can be cumbersome at high-speed transmission (e.g., 400 GigE and beyond). If this PN is not synchronized quickly then the incrementing of the locally stored 32 most significant bits can get out of sync between the encrypting and decrypting routers and, thus, since the packet number is used as an IV with SAK as the encryption key, there can be errors in encrypting and decrypting packets.

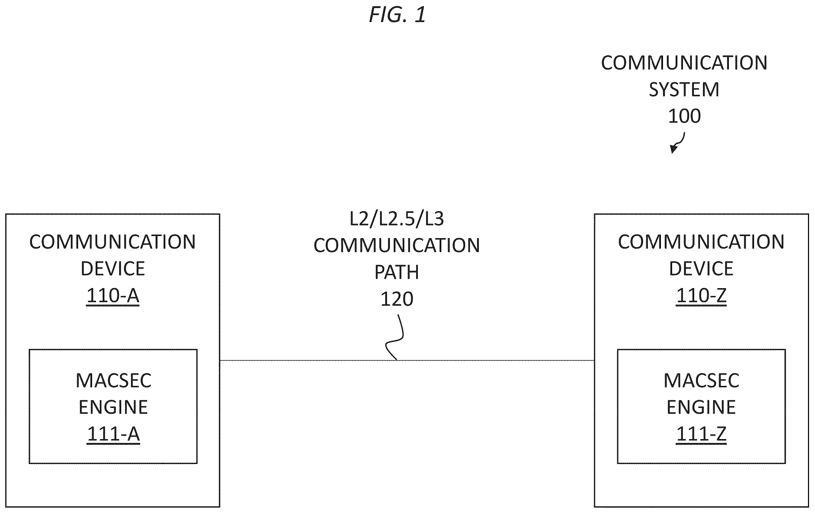

Various example embodiments may be configured to support use of 64-bit PNs within the context of MACsec in a manner that overcomes various issues discussed hereinabove within the context of MACsec. For example, a communication device that is configured to use MACsec to secure communications based on use of 64-bit PNs may be configured to support encoding of the 64-bit PN within the Packet Number (PN) field of the SecTag header, thereby obviating the need for the communication device to maintain and synchronize the 32 most significant bits of the 64-bit PN locally. For example, a communication device that is configured to use MACsec to secure communications based on use of 64-bit PNs may be configured to support use of two operational modes including a first operational mode that operates in accordance with IEEE 802.1AEbw-2013 (namely, where the 32 least significant bits of the 64-bit PN are included in the PN field of the SecTag header and the 32 most significant bits of the 64-bit PN are tracked locally at the communication device) and a second operational mode in which the 64-bit PN is included in the PN field of the SecTag header. For example, a communication device that is configured to use MACsec to secure communications may be configured to support use of larger PNs having other lengths (e.g., 68-bit PNs, 72-bit PNs, or the like). It will be appreciated that at least some such example embodiments also may be applied at various other OSI layers (e.g., L2.5, L3, or the like) which may utilize the SecTag header for securing communications between communication devices. It will be appreciated that these example embodiments, as well as various other example embodiments, may be further understood by considering the communication system of FIG. 1.

FIG. 1 depicts an example embodiment of a communication system configured to support secure communications based on a Media Access Control (MAC) Security Tag (SecTag) header.

The communication system 100 may be configured to support secure communications at various OSI layers, including Layer 2, Layer 2.5, Layer 3, or the like, as well as various combinations thereof. For example, the communication system 100 may be configured to support communications based on Ethernet Layer 2 only, Layer 2.5 such as by using Ethernet frames for transport of Layer 2.5 packets (e.g., MPLS packets or the like), Layer 3 such as by using Ethernet frames for transport of Layer 3 packets (e.g., IP packets or the like), or the like, as well as various combinations thereof. This secure communication can be based on Layer 2 (e.g., MAC) forwarding or Layer 2.5 (e.g., MPLS) forwarding or Layer 3 (e.g., IP, including IPv4, IPv6, SRv6, or the like) forwarding, or the like, as well as various combinations thereof. It will be appreciated that various other communications technologies associated with various communication layers may be applied to support communications within the context of the communication system 100.

The communication system 100 may be configured to support secure communications at Layer 2 based on use of MACsec, where the SecTag header may be used within the context of MACsec to provide a MACsec frame securing a Layer 2 frame. MACsec is an industry-standard security technology that provides secure communication for traffic on Ethernet links. MACsec, which is standardized in IEEE 802.1AE and related standards, generally supports security of a Layer 2 frame by (1) encrypting a portion of the Layer 2 frame such that encryption starts from after the SecTag header to the end of the payload of the Layer 2 frame while leaving the Ethernet MAC addresses in the clear and (2) calculating authentication over the entire Layer 2 frame including the MAC header and the SecTag header. It will be appreciated that MACsec may be applied in other ways for securing communications within the communication system 100 of FIG. 1.

The communication system 100 may be configured to support secure communications at other OSI layers, such as Layer 2.5 and Layer 3, based on use of the SecTag header at those other OSI layers. For example, the SecTag header may be used to secure Layer 2.5 MPLS flows, Layer 3 IP flows, or the like, as well as various combinations thereof. For MPLS and IP flows, the encryption is started after the SecTag header while leaving the MPLS label stack and/or IP header in the clear, whereas the authentication is done from the SecTag header to the end of the payload while leaving the MPLS label stack and/or the IP header as well as the Ethernet header unauthenticated. It will be appreciated that the SecTag header may be applied in other ways for securing communications within the communication system 100 of FIG. 1.

The communication system 100 includes a pair of communication devices 110-A and 110-Z (collectively, communication devices 110) which may communicate over an L2/L2.5/L3 communication path 120. The communication devices 110 may be configured to communicate over the L2/L2.5/L3 communication path 120 based on L2, L2.5, and/or L3 technologies. The communication devices 110 may be configured to communicate over the L2/L2.5/L3 communication path 120 such that the communications over the L2/L2.5/L3 communication path 120 are secured. The communication devices 110 may be configured to communicate over the L2/L2.5/L3 communication path 120 such that the communications over the L2/L2.5/L3 communication path 120 are secured based on use of the SecTag header (e.g., within the context of MACsec applied at Layer 2, based on use of the SecTag header at other OSI layers, or the like, as well as various combinations thereof). It will be appreciated that security for communications between the communication devices 110 over the L2/L2.5/L3 communication path 120 may be applied in various other ways.

The communication devices 110 and the L2/L2.5/L3 communication path 120 may be associated with various communication contexts within which security may be applied to secure communications between the communication devices 110 over the L2/L2.5/L3 communication path 120. For example, the communication devices 110 may include end devices (e.g., computers, smartphones, gaming systems, cameras, robots, or the like), bridges, routers, switches, firewalls, or the like. For example, the L2/L2.5/L3 communication path 120 may represent one or more communication links, one or more communication networks, or the like. For example, the communication devices 110-A and 110-Z may be, respectively, a client and a server, a customer router and a provider router, a pair of provider routers, a pair of customer routers communicating over a communication network, or the like. It will be appreciated that the foregoing examples are merely a few of the ways in which example embodiments may be used to support secure communications by the communication devices 110 over the L2/L2.5/L3 communication path 120.

The communication devices 110 may be configured to support secure communications over the L2/L2.5/L3 communication path 120 based on use of MACsec engines. The communication devices 110-A and 110-Z include MACsec engines 111-A and 111-Z (collectively, MACsec engines 111), respectively, configured to support secure communications based on use of SecTag headers. For example, when securing L2 communications based on MACsec, the MACsec engines 111 may be configured to support secure communications based on MACsec in accordance with one or more IEEE 802.1AE standards (e.g., IEEE 802.1AE-2006, IEEE 802.1AEbw-2013, or the like, as well as various combinations thereof). For example, when securing communications at other OSI layers (e.g., L2.5, L3, or the like), the MACsec engines 111 may be specifically configured to operate at one or more of those other OSI layers for securing communications at those other OSI layers. The MACsec engines 111 may be implemented within hardware (HW) only, software (SW) only, or using a combination of HW and SW. It will be appreciated that the MACsec engines 111 may be implemented in various other ways while supporting secure communications within the context of the communication system 100.

The MACsec engines 111 may be configured to support secure communications by supporting inclusion of the SecTag header within a protocol data unit (PDU) such that the SecTag header encapsulates the encrypted portion of the PDU, which is typically referred to as the encrypted payload of the PDU. Here, the encrypted portion of the PDU that is secured by the SecTag header may be associated with any layer of the OSI model capable of being secured based on a MACsec encryption engine and its SecTag header, such as a Layer 2 frame or a portion thereof, a Layer 2.5 packet or a portion thereof, a Layer 3 packet or a portion thereof, or the like. For example, the encrypted portion of the PDU that is secured by the SecTag header may be an Ethernet frame or a portion thereof, an MPLS packet or a portion thereof (e.g., an MPLS payload of an MPLS packet where the MPLS header of the MPLS packet is placed in front of the SecTag header so as not to be encrypted), an IP packet or a portion thereof (e.g., an IP payload of an IP packet where the IP header of the IP packet is placed in front of the SecTag header so as not to be encrypted), or the like. It will be appreciated that the MACsec engines 111 may be configured to support various other functions in order to support secure communications based on inclusion of SecTag headers within PDUs at various OSI layers.

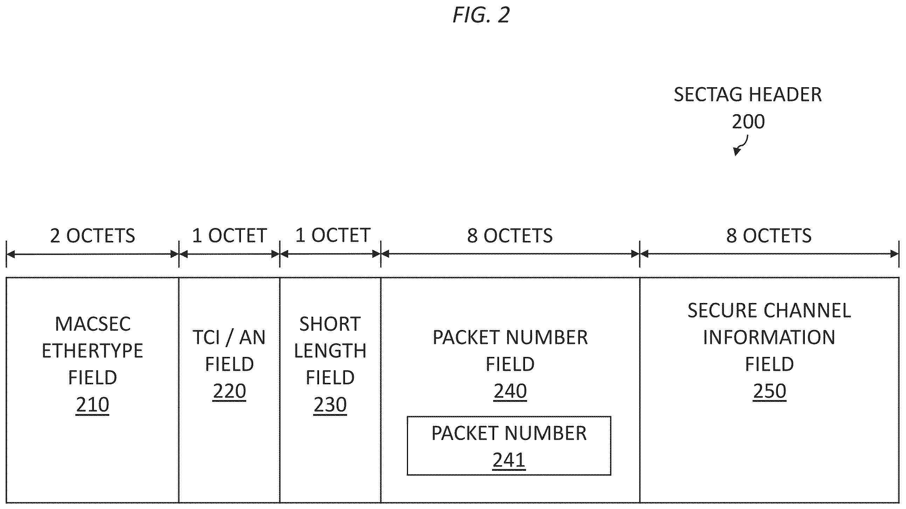

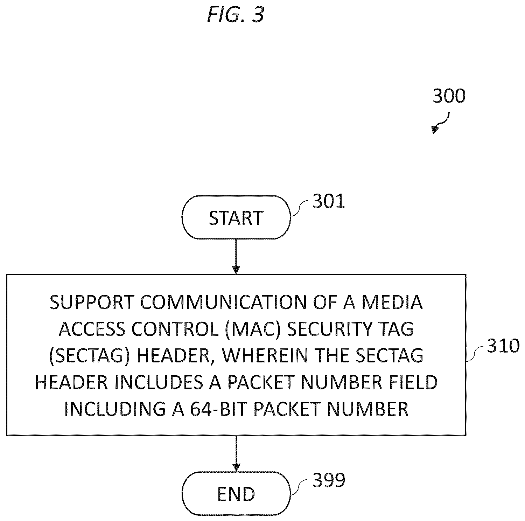

The MACsec engines 111 may be configured to support secure communications based the SecTag header by supporting use of larger PNs (e.g., 64-bit PNs, as well as longer PNs, although for purposes of clarity various example embodiments are primarily presented herein within the context of supporting PNs that are 64 bits in length) within the SecTag header. The MACsec engines 111 may be configured to support use of 64-bit PNs within the SecTag header by supporting encoding of 64-bit PNs within the Packet Number (PN) field of the SecTag header. It will be appreciated that encoding of the 64-bit PNs within the PN field of the SecTag header may be further understood by way of reference to FIG. 2 and FIG. 3. It will be appreciated that the MACsec engines 111 may be configured to support various other functions for supporting use of 64-bit PNs within the context of secure communications based on inclusion of SecTag headers within PDUs at various OSI layers.

The MACsec engines 111 may be configured to support, based on support for use of 64-bit PNs within the context of the PN field in the SecTag header, use of 64-bit PNs for multi-link paths, such as for multi-link paths that are based on Link Aggregation Group (LAG) techniques, Equal-Cost Multi-Path (ECMP) techniques, or the like. Here, the link types of the links in the set of links for the multi-link path may vary for different types of multi-path technologies which may be applied (e.g., for LAG techniques versus ECMP techniques). For example, for LAG, the set of links of a multi-link path based on a LAG may include a set of physical links (or the associated ports or interfaces supporting those physical links) associated with each other to form the LAG bundle. For example, for ECMP, the set of links of a multi-link path based on an ECMP group may include a set of logical links (or the associated sub-ports or interfaces supporting those logical links) which constitute the member paths or member routes in the ECMP group (e.g. network links that connect two endpoints and which may traverse common and/or different physical infrastructure so as to provide multiple paths or routes (e.g., L2.5 paths or routes, L3 paths or routes, or the like) between the endpoints). Accordingly, it will be appreciated that, although the term "links" is primarily used herein to identify or reference the members of a group associated together to provide a multi-link path (e.g., physical links, logical links, or the like), in at least some contexts other related terms also or alternatively may be used to identify or reference the members of a group associated together to provide a multi-link path (e.g., a port that is used as a LAG member in a LAG bundle, a sub-port that is used to create a logical interface for an IP interface that is used in an ECMP group, or the like) such that, herein, the term "link" also may be used to identify or represent a port that is used as a LAG member in a LAG bundle, a sub-port that is used to create a logical interface for an IP interface that is used in an ECMP group

The MACsec engines 111 may be configured to support use of 64-bit PNs for multi-link paths based on partitioning of the PN field in the SecTag header and, thus, also based on partitioning of the 64-bit PN value encoded in the PN field of the SecTag header. The PN field may be a 64-bit PN field or may be larger (e.g., to accommodate a 64-bit PN or potentially a longer PN). The PN field may have a format that includes (1) a first portion of the PN field that is reserved for use as a link identifier field configured to encode a link identifier value for identifying the link in the multi-link path over which the given PDU is being sent (e.g., the N MSB positions of the PN field) and (2) a second portion of the PN field that is reserved for use as a PN value field configured to encode a PN value sent for the PDU (e.g., any remaining bit positions of the PN field not included in the N MSB positions being used for the link identifier field). Similarly, the 64-bit PN may have a format that includes: (1) a first portion of the 64-bit PN that is reserved for use as a link identifier value (encoded in the link identifier field portion of the PN field) configured to identify the link in the multi-link path over which the given PDU is being sent (e.g., the N MSBs of the 64-bit PN) and (2) a second portion of the 64-bit PN that is reserved for use as a PN value (encoded in the PN value field portion of the PN field) sent for the PDU (e.g., 64-N remaining bits of the 64-bit PN not included in the N MSBs of the 64-bit PN being used for the link identifier value). It will be appreciated, although primarily presented with respect to use of a portion of the PN field of the SecTag header as the link identifier field, the link identifier field also or alternatively may be provided using one or more other fields of the SecTag header.

The MACsec engines 111 may be configured to support use of 64-bit PNs for multi-link paths, based on partitioning of the PN field in the SecTag header and partitioning of the associated 64-bit PN value encoded in the PN field of the SecTag header, where the partitioning may be performed in various ways. The link identifier field portion of the PN field may include a set of one or more of the most significant bits of the PN field (e.g., one bit position of the PN field per link of the multi-link path, a set of bit positions of the PN field configured to be used to uniquely identify the links of the multi-link path, or the like) which may be set such that the resulting link identifier values encoded within the link identifier field uniquely identify the links of the multi-link path. The PN value field portion of the PN field may include any remaining bits of the PN field (i.e., those bits of the PN field not dedicated for use as the link identifier field) such that, for each link of the multi-link path, the link has a pool of PN values available for the PDUs sent over the link (i.e., the PNs that are incremented for the encrypted PDUs), respectively. It will be appreciated that the partitioning of the PN field in the SecTag header, and the associated partitioning of the 64-bit PN that is encoded in the PN field, may be implemented in other ways.

The MACsec engines 111 may be configured to support use of 64-bit PNs for multi-link paths, based on partitioning of the PN field in the SecTag header and partitioning of the associated 64-bit PN value encoded in the PN field of the SecTag header, where the partitioning may be performed in various ways. For example, a PDU (e.g., a Layer 2 frame, a Layer 2.5 packet, or a Layer 3 packet) may include as SecTag header having a PN field where the PN field may be 64 bits or larger. The PN field can be divided into two portions. The first portion is the MSBs of the PN field and this first portion can be any number of bits (i.e., N bits), where each bit in the first portion (e.g., each bit in the N bits) may represent a link in a multi-link LAG or ECMP bundle. Here, N can be equal to or larger than the number of links in the LAG or ECMP bundle (e.g., most bit positions may be reserved to accommodate additional links). The second portion is the LSBs and represents the packet number for the specific link that is identified in the N MSBs. This length of the second portion is equal to [PN field length - N] (e.g., if the PN field length is 64 bits, then the length of the second portion is [64 - N]). It will be appreciated that the partitioning of the PN field in the SecTag header, and the associated partitioning of the 64-bit PN that is encoded in the PN field, may be implemented in other ways.

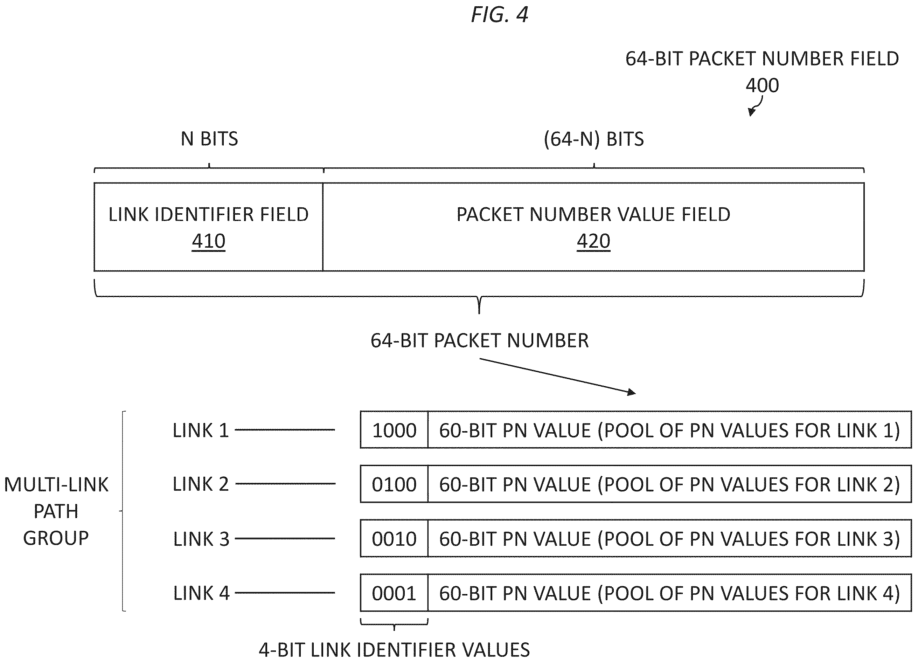

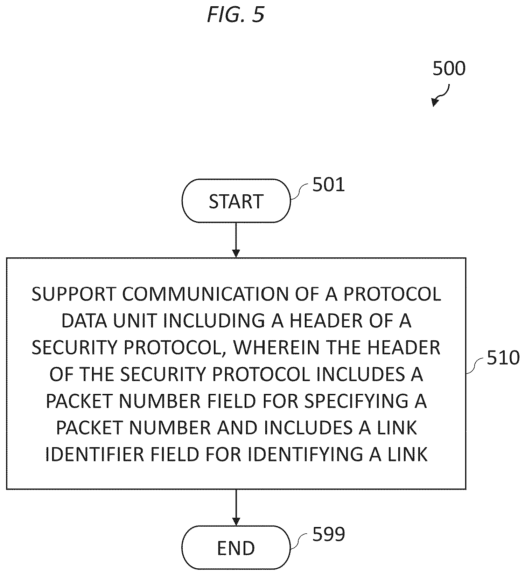

It will be appreciated that support for use of 64-bit PNs for securing communications over multi-link paths may be further understood by way of reference to FIG. 4 and FIG. 5.

It will be appreciated that the MACsec engines 111 may be configured to support various other functions for supporting use of 64-bit PNs for securing communications over multi-link paths.

The MACsec engines 111, in order to support encoding of the 64-bit PN in the PN field of the SecTag header while also supporting backward compatibility with IEEE 802.1AEbw-2013, may be configured to support two operational modes as follows: (1) a first operational mode (which also may be referred to as a legacy mode) which is compliant with IEEE 802.1AEbw-2013 (e.g., where the 32 least significant bits of the 64-bit PN are included in the PN field of the SecTag header and the 32 most significant bits of the 64-bit PN are tracked locally at the communication device) and (2) a second operational mode in which the 64-bit PN is included in PN field of the SecTag header. The MACsec engines 111 may be configured to switch between the operational modes based on configuration of the MACsec engines 111 to use the operational modes (e.g., configuration of both of the MACsec engines 111 to use the first operational mode or configuration of both of the MACsec engines 111 to use the second operational mode). It will be appreciated that the MACsec engines 111 of the communication devices 110, although primarily presented as supporting two operational modes, may support fewer or more operational modes.

It will be appreciated that various example embodiments for supporting secure communications based on encoding of the 64-bit PN in the PN field of the SecTag header may provide various advantages or potential advantages over use of IEEE 802.1AEbw-2013 extended packet numbers (XPNs). It is noted that at least some of these advantages or potential advantages may be further understood by considering the following example related to use of MACsec to secure traffic of an MPLS LSP where multi-path technologies (e.g., LAG or ECMP) are being utilized, with the first example describing use of IEEE 802.1AEbw-2013 for securing the LSP (i.e., the first operational mode discussed above) and the second example describing use of 64-bit PNs within the PN field of the SecTag header for securing the LSP (i.e., the second operational mode discussed above).

In the first example, assume that IEEE 802.1AE is being used to encrypt an LSP, the customer is using a 400 GigE port and is using IEEE 802.1AEbw-2013 extended packet numbers (XPNs), and the customer has LAG or ECMP enabled on the uplink ports. The LSP that is being transmitted needs to be encrypted via the same SAK (encryption key) and correct IV (PN) over multiple uplink ports. Each uplink port has its own encryption engine and, as such, the same SAK, and the PN needs to be precisely synchronized across the two encryption engines. The synchronization of the 32 least significant bits of the PN on the ECMP or LAG ports that are on two or more encryption engines at 400 GigE can be cumbersome as, at 400 GigE, the PNs can be rolling over approximately every 5 seconds. So, the encryption engines that are transmitting the LSP need to precisely synchronize the PNs very quickly. If the 32 least significant bits of the PN are not synchronized correctly across the two encryption engines, the 32 most significant bits of the PN which are tracked locally on the encryption engines can go out of sync as well. This loss of synchronization of the bits of the 64-bit PN may then cause the packets for the same LSP over LAG or ECMP not to be encrypted correctly or decrypted correctly. As mentioned, if the packet numbers are out of sync, since the PN is used for IV in the encryption, encryption/decryption issues could result. These potential issues may be prevented by encoding the entire 64 bit PN within the PN field of the SecTag header. In this example, the 64-bit PN in the PN field of the SecTag header can then be divided into segments, with each segment corresponding to a port that is part of a LAG bundle or ECMP group. An example illustrating the benefits of this arrangement follows.

In the second example, if the entire 64-bit PN is transmitted in the PN field of the SecTag header then, for a four member LAG bundle, the four most significant bits can be set with each bit corresponding to a link (e.g., a port) in the LAG bundle or a link (e.g., a sub-port or interface) in the ECMP group. For example, PORT-1 may be represented by bit 61 in the 64-bit PN field, PORT-2 may be represented by bit 62 in the 64-bit PN field, and so forth. Using this method, each link has its own link identifier value via the link identifier field on the most significant bits of the PN field (using the 4 most significant bits for link identification) and the 60 remaining bits of the PN field may be used for the PN values for that link, respectively. This will provide a very large PN for each link uniquely as each link (e.g., port) in the LAG bundle or link (e.g., sub-port or interface) in ECMP group has its own PN pool. So, if the LSP packets are sprayed over the four links, there is no need for PN synchronization on each link as each 64-bit PN is made unique based on the link ID. It will be appreciated that this is merely one example of a problem which can be overcome based on encoding of the 64-bit PN in the PN field of the SecTag header and, thus, that encoding of the 64-bit PN in the PN field of the SecTag header may be used advantageously in various other scenarios in which issues or inefficiencies may arise when using IEEE 802.1AEbw-2013 XPN in which the 32 least significant bits are transmitted within the packet and the 32 most significant bits are incremented locally.

It will be appreciated that various example embodiments for supporting secure communications based on encoding of the 64-bit PN in the PN field of the SecTag header may provide various advantages or potential advantages over use of IEEE 802.1AEbw-2013 extended packet numbers (XPNs) within various other contexts within which SecTag headers may be applied to secure communications between communication devices.

FIG. 2 depicts an example embodiment of a SecTag header configured to support use of 64-bit packet numbers. As depicted in FIG. 2, a SecTag header 200, which also may be referred to as the SecTag or simply SecTag, includes a MACsec EtherType field 210, a TAG Control Information (TCI) / Association Number (AN) field 220, a Short Length (SL) field 230, a Packet Number (PN) field 240, and a Secure Channel Information (SCI) field 250. The SecTag header 200 is configured to support encoding of a 64-bit PN 241 within PN field 240. The encoding of the 64-bit PN 241 within the PN field 240 may be implemented in various ways. For example, the PN field 240 may be extended from a length of 32 bits or 4 octets as currently specified in IEEE 802.1AE to a length of 64 bits or 8 octets (or longer) in order to accommodate encoding of the 64-bit PN 241 (or longer PNs where the size of the PN field 240 is further extended). It will be appreciated that the PN field 240 of the SecTag header 200 may be defined or redefined in various other ways that may enable support for encoding of larger PNs, such as the 64-bit PN 241, in the PN field 240 of the SecTag header 200.

FIG. 3 depicts an example embodiment of a method for use by a communication device to support secure communications based on use of 64-bit packet numbers within the SecTag header. It will be appreciated that, although primarily presented herein as being performed serially, at least a portion of the functions of method 300 may be performed contemporaneously or in a different order than as presented in FIG. 3. At block 301, the method 300 begins. At block 310, support communication of a Media Access Control (MAC) Security Tag (SecTag) header, wherein the SecTag header includes a packet number field including a 64-bit packet number. Here, for example, the communication of the SecTag header may be supported within the context of any OSI layer in which the SecTag header may be applied to secure communications (e.g., within the context of MACsec at Layer 2, for securing MPLS flows at Layer 2.5, for securing IP flows at Layer 3, or the like, as well as various combinations thereof). The support for communication of the SecTag header may include one or more of generating the SecTag header or a frame or packet including the SecTag header, transmitting the SecTag header or a frame or packet including the SecTag header, forwarding the SecTag header or a frame or packet including the SecTag header, receiving the SecTag header or a frame or packet including the SecTag header, processing the SecTag header or a frame or packet including the SecTag header, or the like, as well as various combinations thereof. The SecTag header may be included within a Layer 2 frame secured based on Media Access Control Security (MACsec). The SecTag header may be included within a Layer 2 frame, a Layer 2.5 packet, or a Layer 3 packet. The SecTag header may be included within an Ethernet frame, an MPLS packet, or an IP packet. The SecTag header may include a link identifier field for identifying a link over which the SecTag header is sent. The link identifier field may form part of the packet number field of the SecTag header. The link identifier field may include N most significant bits of the packet number field of the SecTag header. The link may be associated with a LAG or an ECMP group. The 64-bit packet number may be configured such that a portion of the 64-bit packet number identifies a link over which the SecTag header is sent. The link may be associated with a LAG or an ECMP group. At block 399, the method 300 ends.

FIG. 4 depicts an example embodiment of use of a 64-bit packet number to support secure communications over a multi-link path based on partitioning of the 64-bit packet number.

As depicted in FIG. 4, a 64-bit PN field 400 is configured to support unique identification of links within a multi-link path as well as corresponding pools of PNs for each of the links of the multi-link path. The 64-bit PN field 400 is configured such that a first portion of the 64-bit PN field 400 is used as a link identifier field 410 for uniquely identifying the link of the multi-link path and a second, remaining, portion of the 64-bit PN field 400 is used as a PN value field 420 for providing a pool of PN values specific to the link indicated by the link identifier field 410. The 64-bit PN field 400 includes a 64-bit PN, where the link identifier field 410 encodes a link identifier which forms a first part of the 64-bit PN and the PN value field 420 encodes a PN value for the link which forms a second part of the 64-bit PN. The use of the 64-bit PN field 400 to secure communications over a multi-link path based on partitioning of the 64-bit PN may be further understood by considering the specific example depicted in FIG. 4.

As illustrated in the example of FIG. 4, the multi-link path includes four links (denoted as Link 1, Link 2, Link 3, and Link 4) which form the multi-link path group for the multi-link path (e.g., the links are the members of the multi-link path). Here, the links may be physical links (e.g., in a LAG), logical links (e.g., in an ECMP group, or the like). In this example, the 64-bit PN field 400 is configured such that the link identifier field 410 includes 4 bit positions of the 64-bit PN field 400 (illustratively, the 4 MSBs) and the PN value field 420 includes the remaining 60 bit positions of the 64-bit PN field 400 (illustratively, the remaining 60 LSBs). In this example, for the link identifier field 410, the link identifier values for the links are encoded in link identifier field 410 using the 4 MSBs of the 64-bit PN field 400 as follows: the bit position 63 is set to "1" for Link 1 (i.e., "1000" is encoded in the link identifier field 410 as the link identifier value for Link 1), bit position 62 is set to "1" for Link 2 (i.e., "0100" is encoded in the link identifier field 410 as the link identifier value for Link 2), bit position 61 is set to "1" for Link 3 (i.e., "0010" is encoded in the link identifier field 410 as the link identifier value for Link 3), and bit position 60 is set to "1" for Link 4 (i.e., "0001" is encoded in the link identifier field 410 as the link identifier value for Link 4). In this example, for the PN value field 420, the PN values for the PDUs being sent over the links are encoded in the PN value field 420 using the 60 LSBs of the 64-bit PN field 400 (illustratively, for each of the links the PN value field 420 may be used to encode the PN values for the PDUs sent over the links, respectively). In other words, it may be seen that the use of the link identifier field 410 to encode link identifier values that uniquely identify the links of the multi-link path ensures that the PN value field 420 may be used to support pools of PN values for the links of the multi-link path, respectively.

As may be seen from FIG. 4, the partitioning of the 64-bit PN field 400 into the link identifier field 410 portion and the PN value field 420 portion encoding the link identifier and the PN value, respectively, obviates the need for MACsec engines associated with the links of the multi-link path to synchronize use of PNs for the multi-link path across the MACsec engines, thereby enabling each MACsec engine to operate independently using the pool of PN values which may be encoded in the PN value field 420 based on unique identification of the links using the link identifier field 410 (i.e., per-link pools of PN values which may be used by the respective MACsec engines independently). In each case, when a PDU including a SecTag header encoding a 64-bit packet number is sent over one of the links of the multi-link path, the setting of the link identifier field 410 with the 4-bit link identifier value that uniquely identifies that link of the multi-link path ensures that the remaining 60 bits which are used as the PN value field 420 may be incremented for PDUs sent over that link of the multi-link path, essentially providing a pool of 60-bit PN values which may be used for PDUs sent over the link (i.e., the PN values are used to specify the PNs of the link). In other words, each of the links of the multi-link path essentially has its own 60-bit pool of PNs which may be used for PDUs (e.g., MACsec frames, L2.5 packets, L3 packets, or the like) sent over the links of the multi-link path, respectively.

It will be appreciated, although primarily presented with respect to example embodiments in which the multi-link path includes a specific number of links (namely, 4 links) and a specific number of bit positions of the PN field are used as the link identifier portion for uniquely encoding the link identifier values to identify the links of the multi-link path (namely, 4 bit positions such that N = 4), various other example embodiments may be supported. For example, if the PN field in the SecTag header is 64 bits, N = 8 (i.e., the 8 MSB positions of the 64-bit PN field are reserved for link identification), and the multi-link path is a bundle with 4 links (e.g., a LAG or ECMP bundle with 4 links), then the 8 MSBs reserved for use as the link identifier field portion of the PN field may be set as follows for identification of the four links: (00000001 represents the first link, 00000010 represents the second link, 00000100 represents the third link, and 00001000 represents the fourth link). In this example, the 56 LSBs (64 - 8) of the PN field would then be used to specify the PN value for each link. It will be appreciated that various other modifications may be applied for supporting various example embodiments.

It will be appreciated that, although primarily presented with respect to example embodiments in which the multi-link path includes a specific number of links and a specific number of bit positions of the PN field are used as the link identifier portion for uniquely encoding the link identifier values to identify the links of the multi-link path, various other example embodiments may be supported. For example, fewer or more links may be associated to form a multi-link path. For example, fewer or more bit positions of the PN field may be reserved for use as the link identifier field (e.g., N bit positions may be used to support identification of x links of the multi-link path where N = x, N bit positions may be used to support identification of x links of the multi-link path where 2^{N} ≥ X, N bit positions may be reserved for use as the link identifier field even though only x links are currently associated as the multi-link path (N > x) so as to ensure an adequate number of available bit positions for link identification in case additional links are added to the multi-link path, or the like. It will be appreciated that various other modifications may be applied for supporting various example embodiments.

FIG. 5 depicts an example embodiment of a method for use by a communication device to support secure communications over a multi-link path based on partitioning of packet numbers. It will be appreciated that, although primarily presented herein as being performed serially, at least a portion of the functions of method 500 may be performed contemporaneously or in a different order than as presented in FIG. 5. At block 501, the method 500 begins. At block 510, support communication of a protocol data unit including a header of a security protocol, wherein the header of the security protocol includes a packet number field for specifying a packet number and includes a link identifier field for identifying a link. The support for communication of the protocol data unit may include generating the protocol data unit, transmitting the protocol data unit, forwarding the protocol data unit, receiving the protocol data unit, processing the protocol data unit, or the like, as well as various combinations thereof. The protocol data unit may be a frame, a packet, or other suitable type of protocol data unit. The packet number field may be configured such that a first portion of the packet number field includes the link identifier field, and a second portion of the packet number field includes a packet number value field. The packet number field may be configured such that a first portion of the packet number includes a link identifier value identifying the link, and a second portion of the packet number includes a packet number value sent for the protocol data unit. The packet number field may include the link identifier field. The link identifier field may be defined as one or more of the most significant bits of the packet number field. The link identifier field may have encoded therein a link identifier value identifying a link over which the protocol data unit is sent. The packet number field may include the link identifier field and a packet number value field, where the link identifier field has encoded therein a link identifier value identifying a link over which the protocol data unit is sent, and where the packet number value field has encoded therein a packet number value sent for the protocol data unit. The packet number value sent for the protocol data unit may be selected from a pool of packet number values for the link over which the protocol data unit is sent. The link identifier field may include a link identifier value identifying a link of a multi-link path including a plurality of links. The plurality of links may be associated as a LAG or an ECMP group. The plurality of links may include x links, where the link identifier field may be defined as the N most significant bits of the packet number field, where N ≥ x. The plurality of links may include x links, where the link identifier field may be defined as the N most significant bits of the packet number field, where 2^{N} ≥ x. The packet number may have a length of at least 64 bits. The security protocol may include a MACsec protocol based on at least one IEEE 802.1AE standard. The header of the security protocol may include a SecTag header. The protocol data unit may include a Layer 2 frame, a Layer 2.5 packet, or a Layer 3 packet. The protocol data unit may include a Layer 2 frame secured using a SecTag header based on MACsec, a Layer 2.5 packet secured using a SecTag header, a Layer 3 packet secured using a SecTag header, or the like. At block 599, the method 500 ends.

Various example embodiments of the secure communication capability may be configured to provide various advantages or potential advantages. For example, various example embodiments of the secure communication capability may be configured to enable communication devices to support use of larger PNs, such as 64-bit PNs, based on support for encoding of the larger PNs within the SecTag header, thereby obviating the need for the communication devices to maintain and synchronize portions of the PNs (e.g., the 32 most significant bits of the 64-bit PN as in IEEE 802.1AEbw-2013) locally. For example, various example embodiments of the secure communication capability may be configured to enable communication devices to support use of larger PNs based on support for encoding of the PNs within the PN field of SecTag header while also ensuring backwards compatibility with use of XPNs as defined in IEEE 802.1AEbw-2013. For example, various example embodiments of the secure communication capability may be configured to enable communication devices to use a portion of the PN for link identification within the context of multi-link groups, thereby enabling support for application of MACsec to multi-link paths while obviating the need for synchronization of PNs between the links of the multi-link paths. It will be appreciated that various example embodiments of the secure communication capability may be configured to provide various other advantages or potential advantages.

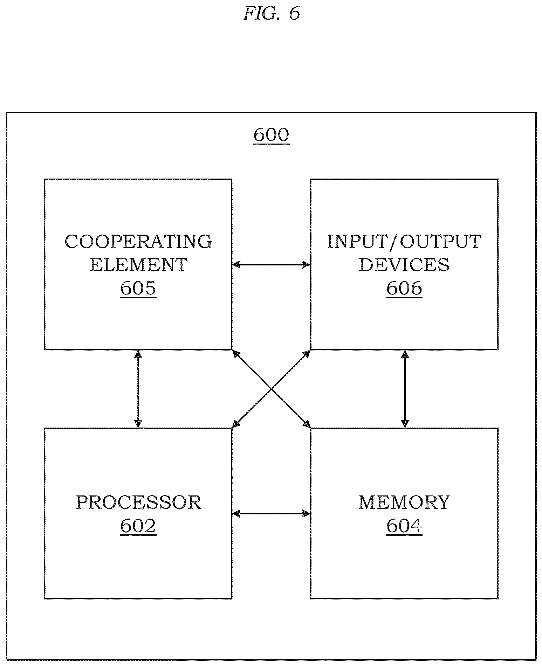

FIG. 6 depicts an example embodiment of a computer suitable for use in performing various functions presented herein.

The computer 600 includes a processor 602 (e.g., a central processing unit (CPU), a graphics processing unit (GPU), a network processing unit (NPU), a processor, a processor core of a processor, a subset of processor cores of a processor, a set of processor cores of a processor, or the like) and a memory 604 (e.g., a random access memory (RAM), a read-only memory (ROM), or the like). In at least some example embodiments, the computer 600 may include at least one processor and at least one memory storing instructions that, when executed by the at least one processor, cause the computer to perform various functions presented herein.

The computer 600 also may include a cooperating element 605. The cooperating element 605 may be a hardware device. The cooperating element 605 may be a process that can be loaded into the memory 604 and executed by the processor 602 to implement various functions presented herein (in which case, for example, the cooperating element 605 (including associated data structures) can be stored on a non-transitory computer readable medium, such as a storage device or other suitable type of storage element (e.g., a magnetic drive, an optical drive, or the like)).

The computer 600 also may include one or more input/output devices 606. The input/output devices 606 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 600 may represent a general architecture and functionality suitable for implementing functional elements described herein, portions of functional elements described herein, or the like, as well as various combinations thereof. For example, computer 600 may provide a general architecture and functionality that is suitable for implementing one or more elements presented herein, such as a communication device or a portion thereof, a MACsec engine or a portion thereof, or the like, as well as various combinations thereof.

It will be appreciated that various functions presented herein may be implemented within hardware, a combination of hardware and software, or the like. For example, at least some of the functions presented herein may be implemented in hardware (e.g., using a general purpose computer, one or more application specific integrated circuits, and/or any other hardware equivalents). For example, at least some of the functions presented herein may be implemented in a combination of hardware and software (e.g., via implementation of software on one or more processors, for executing on a general purpose computer (e.g., via execution by one or more processors) so as to provide a special purpose computer, and the like).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored within non-transitory computer-readable media, such as within memory within a computing device operating according to the instructions, within fixed or removable media, or the like. It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other network or computing.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
at least one processor; and
at least one memory storing instructions which, when executed by the at least one processor, cause the apparatus at least to:
support communication of a Media Access Control (MAC) Security Tag (SecTag) header, wherein the SecTag header includes a packet number field including a 64-bit packet number.

2. The apparatus according to claim 1, wherein the SecTag header is included within a Layer 2 frame secured based on Media Access Control Security (MACsec).

3. The apparatus according to any of claims 1 to 2, wherein the SecTag header is included within a Layer 2 frame, a Layer 2.5 packet, or a Layer 3 packet.

4. The apparatus according to any of claims 1 to 3, wherein the SecTag header is included within an Ethernet frame, a Multiprotocol Label Switching (MPLS) packet, or an Internet Protocol (IP) packet.

5. The apparatus according to any of claims 1 to 4, wherein the SecTag header further includes a link identifier field for identifying a link over which the SecTag header is sent.

6. The apparatus according to claim 5, wherein the link identifier field forms part of the packet number field, wherein the link identifier field includes N most significant bits of the packet number field.

7. The apparatus according to any of claims 1 to 6, wherein a portion of the 64-bit packet number identifies a link over which the SecTag header is sent.

8. An apparatus, comprising:
at least one processor; and
at least one memory storing instructions which, when executed by the at least one processor, cause the apparatus at least to:
support communication of a protocol data unit including a header of a security protocol, wherein the header of the security protocol includes a packet number field for specifying a packet number and includes a link identifier field for identifying a link.

9. The apparatus according to claim 8, wherein a first portion of the packet number field includes the link identifier field, wherein a second portion of the packet number field includes a packet number value field.

10. The apparatus according to any of claims 8 to 9, wherein a first portion of the packet number includes a link identifier value identifying the link, wherein a second portion of the packet number includes a packet number value sent for the protocol data unit.

11. The apparatus according to any of claims 8 to 10, wherein the packet number field includes the link identifier field, wherein the link identifier field has encoded therein a link identifier value identifying a link over which the protocol data unit is sent.

12. The apparatus according to any of claims 8 to 11, wherein the packet number field includes the link identifier field and a packet number value field, wherein the link identifier field has encoded therein a link identifier value identifying a link over which the protocol data unit is sent, wherein the packet number value field has encoded therein a packet number value sent for the protocol data unit.

13. The apparatus according to any of claims 8 to 12, wherein the link identifier field includes a link identifier value identifying a link of a multi-link path including a plurality of links.

14. The apparatus according to any of claims 8 to 13, wherein the packet number has a length of at least 64 bits.

15. A protocol data unit comprising a header of a security protocol, wherein the header of the security protocol includes a packet number field for specifying a packet number and includes a link identifier field for identifying a link.
